Europäisches Patentamt

European Patent Office

Office européen des brevets

(19)

(11) Veröffentlichungsnummer: **0 227 991**
**B1**

(12) **EUROPÄISCHE PATENTSCHRIFT**

(45) Veröffentlichungstag der Patentschrift: **14.03.90**

(51) Int. Cl.⁵: **F 16 C 27/02,** F 16 C 17/03

(21) Anmeldenummer: **86117177.5**

(22) Anmeldetag: **10.12.86**

(54) Aerodynamisches Gleitlager.

(30) Priorität: **14.12.85 DE 3544392**

(43) Veröffentlichungstag der Anmeldung:
**08.07.87 Patentblatt 87/28**

(45) Bekanntmachung des Hinweises auf die
Patenterteilung:
**14.03.90 Patentblatt 90/11**

(84) Benannte Vertragsstaaten:
**DE ES FR GB IT**

(56) Entgegenhaltungen:
BE-A- 860 813
FR-A- 464 562
US-A-3 434 762
US-A-3 711 169
US-A-3 738 717
US-A-4 097 094

TRANSACTIONS OF THE ASME SERIES B:
JOURNAL OF ENGINEERING FOR INDUSTRY,
Band 98, Nr. 3, August 1976, Seiten 1053-1056,
A.S.M.E., New York, US; J.M. TESSARZIK et al.:
"Suppression of rotor-bearing system vibrations
through flexible bearing support damping"

(73) Patentinhaber: **Klöckner-Humboldt-Deutz
Aktiengesellschaft
Deutz-Mülheimer-Strasse 111 Postfach 80 05 09
D-5000 Köln 80 (DE)**

(72) Erfinder: **Dammel, Uwe, Dipl.-Ing.
Königstädterstrasse 23
D-6085 Nauheim (DE)**
Erfinder: **Domes, Bernd, Dr.-Ing.
Im Mühlengrund 6
D-6393 Wehrheim 2 (DE)**

(56) References cited:
MASCHINE DESIGN, Band 55, Nr. 15, Juni 1983,
Seiten 127,137, Cleveland, Ohio, US

**Beschreibung**

Die vorliegende Erfindung bezieht sich auf ein aerodynamisches Gleitlager gemäß dem Oberbegriff des Patentanspruchs 1.

Aerodynamische Gleitlager verwenden als Schmiermittel Luft und andere Gase. Der für die Tragkraft des Lagers notwendige Druck im Schmierspalt wird ähnlich wie bei hydrodynamischen Lagern selbsttätig durch die Gleitbewegung der Laufflächen in keilförmig konvergierenden Bereichen des Schmierspalts (Tragkeil oder Schmierkeil) erzeugt. Mehrere Schmierkeile auf dem Lagerumfang verbessern die Lagerführung und Stabilität.

Die niedrige Viskosität von Gasen ermöglicht im Vergleich zu flüssigkeitsgeschmierten Lagern erheblich höhere Gleitgeschwindigkeiten. Gleichzeitig wird die Verlustleistung im Lager herabgesetzt. Gase behalten ihre Schmiereigenschaften über weite Temperaturbereiche von sehr niedrigen bis sehr hohen Temperaturen bei. Außerdem gibt es kaum Dichtungsprobleme, da ein aerodynamisches Lager sein Schmiermittel aus dem Arbeitsmedium entnimmt.

Aus diesen Gründen können aerodynamische Gleitlager für extreme Betriebsbedingungen verwendet werden, insbesondere sind hier Lager mit extrem hohen Umfangsgeschwindigkeiten angesprochen, die sowohl bei sehr niedrigen als auch bei sehr hohen Betriebstemperaturen arbeiten können. Anwendungsbereiche sind schnellaufende Wellen aller Art, z.B. bei Kleingasturbinen und Abgasturboladern oder bei anderen Turbomaschinen.

Ein gattungsgemäßes aerodynamisches Gleitlager radialer Bauart ist aus dem Journal of Engineering for Industrie, August 1976, Seite 1056 bekannt. Bei dem aus dieser Druckschrift bekannten Gleitlager wird eine Welle von starren Gleitsegmenten getragen, wobei die Gleitsegmente über Federelemente mit einem als Rahmenkonstruktion ausgebildeten Gehäuse verbunden sind. Dabei sind die Gleitsegmente und Federelemente als vollkommen separate Bauteile ausgebildet, die radial hintereinander angeordnet sehr platzaufwendig bauen. Zudem sind die Federelemente bedingt durch die Gesamtkonstruktion des Gleitlagers aus mehreren Teilen aufgebaut und folglich aufwendig zusammenzusetzen.

Die US-A- 3,434,762 betrifft ein hydrodynamisches Lager, bei dem eine Welle von einem federnd ausgebildeten Gleitsegment getragen ist. Die US-A- 3,738,717 beschreibt ein hydrodynamisches Lager, bei dem ebenfalls die Welle in federnd ausgebildeten Gleitsegmenten gelagert ist. Das aus der BE-A- 860 813 bekannte aerodynamische Lager weist Gleitsegmente auf, die eine Welle tragen. Die Gleitsegmente sind ihrerseits über flexible Federelemente in einem Gehäuse festgelegt. Dieses Lager weist insgesamt viele Bauteile auf ist und kompliziert zu montieren. Die US-A- 4,097,094 beschreibt ein hydrodynamisches Lager, bei dem die Welle ohne konvergierenden Schmierspalt von Gleitsegmenten getragen wird. Die Gleitsegmente sind von Trägerelementen umgeben, die über einen Viskodämpfer in einem Gehäuse gelagert sind.

Der Erfindung liegt die Aufgabe zugrunde, ein aerodynamisches Gleitlager bereitzustellen, daß gute Dämpfungs- und Federeigenschaften aufweist, dabei aber auch einfach zu fertigen und zu montieren ist.

Diese Aufgabe wird durch die kennzeichnenden Merkmale des Patentanspruchs 1 gelöst. Die Federelemente können dadurch, daß sie jeweils einzeln mit ihren umfangsmäßigen Enden auf dem Gehäuse aufliegen und daß zwischen jedem Federelement und dem Gehäuse ein separater Dämpfungsspalt vorgesehen ist, in ihrer zur Achse der gelagerten Welle parallelen Mittelachse federnd nachgeben, während sie an ihrem umfangsmäßigen Enden vom Gehäuse bzw. von mit dem Gehäuse verbundenen Stegen oder Stiften abgestützt werden. Jedes Federelement besitzt durch die voneinander getrennten Dämpfungsspalte eine eigene Dämpfung, die von den anderen Federelementen unabhängig ist. In vorteilhafter Weise kann dadurch jedes Federelement sowohl in seinem Federvermögen als auch in seiner Dämpfung vollständig getrennt und dadurch verschieden von den anderen Federelementen ausgelegt werden. Die Berücksichtigung richtungsabhängiger Belastungen des Gleitlagers ist dadurch auf einfache Weise möglich. Der Aufbau des Gleitlagers ermöglicht durch den unkomplizierten Aufbau der einzelnen Bauteile eine einfache Fertigung und Montage.

In einer Weiterbildung der Erfindung liegen die Teilstrukturen in radialer Richtung ebenfalls auf den Stegen bzw. Stiften auf, wodurch auf einfache Weise zwischen den Teilstrukturen und dem äußeren Gehäuse ein spaltförmiger Zwischenraum entsteht, der vorteilhaft als Dämpfungsspalt verwendbar ist. Für diesen Zweck können in gleicher Weise nachträglich von außen in das äußere Gehäuse eingeführte Stege bzw. Stifte als auch direkt aus dem Vollen gearbeitete Stege verwendet werden. Die Stege bzw. Stifte übernehmen somit gleichermaßen die Funktion der radialen wie umfangmäßigen Fixierung der federnden und dämpfenden Teilstrukturen des aerodynamischen Gleitlagers.

In Ausgestaltung der Erfindung ist es vorgesehen, die Dämpfungsspalte als Segmente eines Kreisringzylinders auszubilden. Die Dämpfungsspalte erstrecken sich achsparallel zur Wellenachse radial hinter den Teilstrukturen in der Form eines Segmentes eines Kreisringzylinders. Bei Belastung des aerodynamischen Gleitlagers bzw. einer Teilstruktur federt diese Teilstruktur radial nach außen ein, wodurch die querschnittsmäßige Kreisringform verändert wird und Volumen aus dem Dämpfungsspalt verdrängt wird. Die Funktion des Dämpfungsspaltes beruht auf dieser Volumenverdrängung. Bei kreisringförmigem Querschnitt des Dämpfungsspaltes ist das Dämpfungsvermögen des Dämpfungsspaltes besonders einfach berechenbar, weshalb die Eigenschaften eines solchen aerodynamischen Gleitlagers in vorteilhafter Weise rechentechnisch gut erfaßbar sind.

Alternativ ist es für manche Anwendungen zweckmäßig, die Form der Dämpfungsspalte besonderen Gegebenheiten anzupassen. Liegen die Teilstrukturen beispielsweise radial direkt auf dem äußeren Gehäuse auf, so kann der Dämpfungsspalt durch eine entsprechende Ausnehmung im äußeren Gehäuse radial hinter der Teilstruktur erzeugt werden. In diesem Fall ist aus herstellungstechnischen Gründen der Dämpfungsspalt zweckmäßig im Querschnitt mondsichelförmig ausgebildet. Die gleiche mondsichelartige Form des Dämpfungsspaltes kann auch vorteilhaft angewendet werden, wenn der äußere Radius der Teilstruktur größer als der innere Radius des äußeren Gehäuses ausgebildet ist. Derartige Dämpfungsspalte zeichnen sich in erster Linie durch geringe Kosten bei der Herstellung des aerodynamischen Gleitlagers aus. Es hat sich gezeigt, daß die optimalen Werte für die größte lichte Weite des Querschnittes eines Dämpfungsspaltes in etwa zwischen 0,2 und 10 Promille des Durchmessers der gelagerten Welle liegen. Die größte lichte Weite ist dabei der im Querschnitt in radialer Richtung betrachtet, größte Abstand der Teilstruktur von dem äußeren Gehäuse.

Es hat sich herausgestellt, daß das Gleitsegment in vorteilhafter Weise aus Kunstkohle und das Federelement aus Stahl hergestellt wird. Die Welle ist in diesem Fall ebenfalls aus gehärtetem Stahl gefertigt. Unter Kunstkohle ist eine Art gepreßter Kohlenstoff zu verstehen, der im wesentlichen luftundurchlässig ist. Es kommt auch ein Sinterverfahren in Betracht, wobei die Kunstkohle anschließend einer weiteren Wärmebehandlung unterzogen werden muß. Zur Erzeugung der gewünschten Oberflächenkontur der Gleitsegmente können spanabhebende oder aerodierende Bearbeitungsverfahren im Anschluß an die separate Herstellung zweckmäßig sein. Als weiteres günstiges Material für die Gleitsegmente hat sich darüberhinaus Keramik und Bronze herausgestellt. Die Federelemente selbst sind beispielsweise vorteilhaft aus entsprechenden Rohren hergestellt, wobei das einzelne Federelement ein aus diesem Rohr geschnittenes Segment ist. Alternativ kann es ebenfalls vorteilhaft sein, daß Federelement aus einem ebenen Stahlblech durch Rundbiegen oder Pressen herzustellen.

Weitere Vorteile und Merkmale der Erfindung ergeben sich aus der Beschreibung, in der in der Zeichnung dargestellte Ausführungsbeispiele der Erfindung näher erläutert sind. Es zeigt:

Fig. 1 einen Querschnitt durch ein erfindungsgemäßes aerodynamisches Gleitlager mit Stegen und zweiteiligen Teilstrukturen,

Fig. 2 einen Querschnitt durch ein erfindungsgemäßes aerodynamisches Gleitlager mit Stiften und zweiteiligen Teilstrukturen,

Fig. 3 einen Querschnitt durch ein erfindungsgemäßes aerodynamisches Gleitlager mit mondsichelformigen Dämpfungsspalten und zweiteiligen Teilstrukturen,

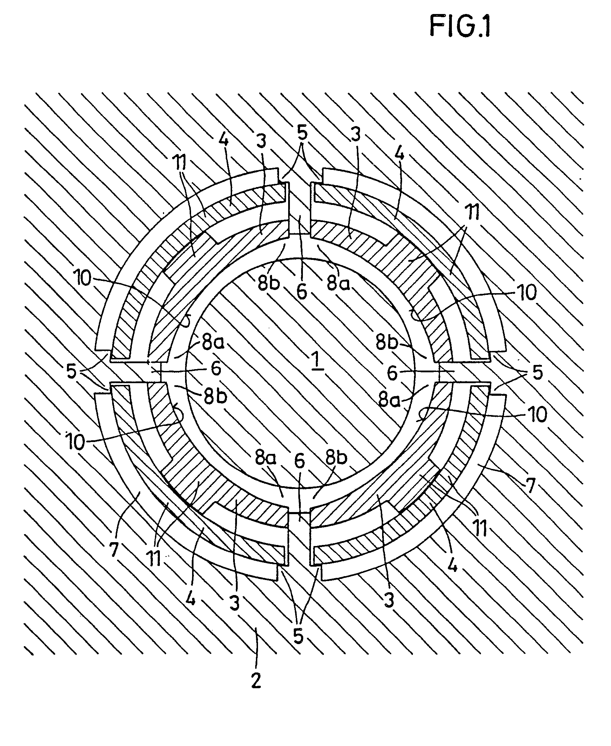

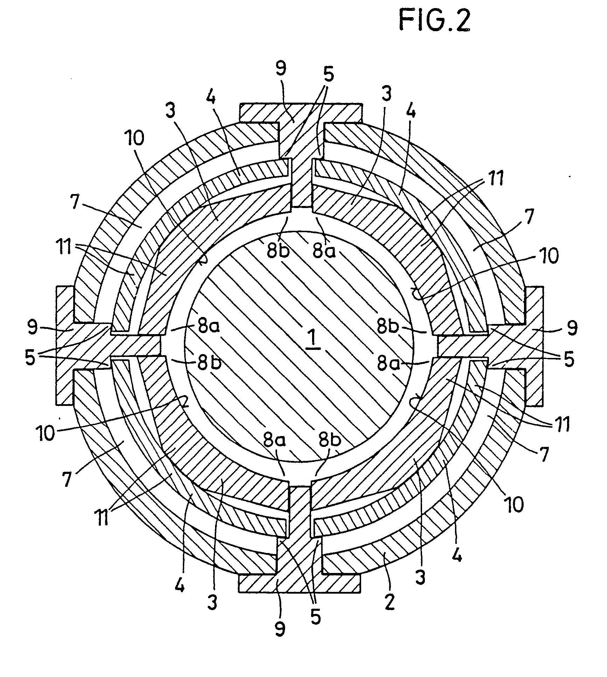

Das in den Fig. 1 und 2 gezeigte aerodynamische Gleitlager stellt ein Radiallager einer Welle 1 in einem Gehäuseteil 2 dar. In umfangsmäßiger Richtung des aerodynamischen Gleitlagers sind vier einzelne Gleitsegmente 3 vorgesehen, die jeweils zur Welle 1 hinweisende Oberflächen 10 aufweisen. Die Gleitsegmente 3 stützen sich in radialer Richtung auf Federelemente 4 ab. Jeweils ein Gleitsegment 3 bildet zusammen mit einem Federelement 4 eine zweiteilige Teilstruktur 11. Die Federelemente 4 liegen mit ihren umfangsmäßigen Enden auf entsprechenden Vorsprüngen 5 von Stegen 6 des Gehäuseteils 2 auf. In radialer Richtung zwischen den Federelementen 4 und dem Gehäuseteil 2 befinden sich Dämpfungsspalte 7. Die Stege 6 reichen soweit in das Innere des aerodynamischen Gleitlagers, daß die Gleitsegmente 3 umfangsmäßig in ihrer Lage von den Stegen 6 festgelegt sind. Die innere Kontur bzw. die Oberfläche 10 der Gleitsegmente 3 bilden die Gleitflächen mit der Welle 1, wobei die Oberfläche 10 kreiszylindermantelförmig ausgebildet ist. Der Radius des Kreiszylindermantels ist größer als der Wellenaußenradius ausgebildet, so daß an jedem Gleitsegment 3 zwei keilförmig konvergierende Tragkeile 8a und 8b gebildet werden.

Die Federelemente 4 sind aus einem Material mit genau bestimmter Federkennung gefertigt, so daß die Federelemente 4 alle eine genau bestimmte Federsteifigkeit aufwesen. Die sich radial auf den Federelementen 4 abstützenden Gleitsegmente 3 bestehen aus einem im wesentlichen starren Material. Insgesamt sind jeweils vier Federelemente 4 und Gleitsegmente 3 vorgesehen. Für manche Anwendungsfälle bei großen Wellendurchmessern kann es zweckmäßig sein, eine größere Anzahl von Federelementen 4 und Gleitsegmenten 3 zur umfangsmäßig gleichmäßigen Lagerung der Welle 1 vorzusehen.

Die erfindungsgemäße Funktion des aerodynamischen Gleitlagers beruht darauf, daß wenn die Welle 1 sich in schnelle rotierende Bewegung versetzt, durch die konvergierenden keilförmigen Tragkeile 8a oder 8b ein Druck in dem Schmiermittel aufgebaut wird. Als Schmiermittel sind bei aerodynamischen Gleitlagern vor allem Luft oder andere Gase vorgesehen. Der Druck hebt die Welle 1 von den Teilstrukturen 11 ab und es erfolgt eine weitgehend verlustlose und verschleißarme Lagerung der Welle 1. Die Materialpaarung der Welle 1 und der Gleitsegmente 3 ist so ausgewählt, daß auch während des Anlaufs die Gleitreibung in verhältnismäßig geringen Größenordnungen gehalten ist. Hier kommen insbesondere für die Gleitsegmente 3 der Teilstrukturen 11 Kunstkohle (gepreßter Graphit) oder Keramik und für die Welle 1 gehärteter oder beschichteter Stahl bzw. Hartmetall zum Einsatz.

Die Federelemente 4 stellen allein die elastischen Eigenschaften des aerodynamischen Gleitlagers sicher, während die Dämpfungsspalte 7 durch ihre gezielte Spaltweite eine definierte Dämpfung des aerodynamischen Gleitlagers erreichen. Durch diese Auftrennung der Aufgaben ist die Berechnung und damit die Auslegung des erfindungsgemäßen aerodynamischen Gleitlagers durch eine Modellrechnung erheblich vereinfacht. Das aerodynamische Gleitlager kann somit mit genau gezielten Feder- und Dämpfungskennwerten versehen werden, so daß es optimal arbeitet.

Durch den umfangsmäßigen Aufbau des aerodynamischen Gleitlagers in einzelne, separate Teilstrukturen 11 ist das aerodynamische Gleitlager unempfindlich gegen Verkantungen und kann geometrische Abweichungen in der Lagergeometrie besonders gut kompensieren.

In Fig. 2 sind anstelle der Stege 6 Stifte 9 vorgesehen, die durch entsprechende Schlitze des Gehäuseteils 2 hindurchgesteckt und ortsfest mit dem Gehäuseteil 2 verbunden sind. Das Gehäuseteil 2 kann mit kreisrunder Innenkontur gefertigt werden und erst anschließend durch Hindurchstecken der Stifte 9 mit einer zum weiteren Aufbau des aerodynamischen Gleitlagers notwendigen Innenkontur versehen werden. Die Herstellung eines solchen aerodynamischen Gleitlagers ist besonders preiswert. Die Gleitsegmente 3 der Teilstrukturen 11 sind auf der den Federelementen 4 zugewandten Seite zu ihren umnfangmäßigen Enden geradlinig auslaufend ausgebildet, wodurch ebenfalls eine Fertigung kostengünstig ermöglicht wird.

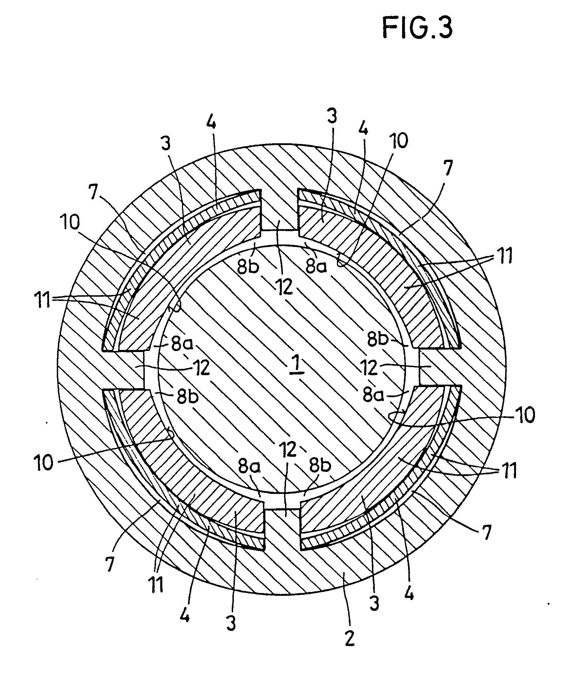

In Fig. 3 ist ein aerodynamisches Gleitlager gezeigt, bei dem die Teilstrukturen 11 ebenfalls zweiteilig aus Gleitsegmenten 3 und Federelementen 4 aufgebaut sind. Das äußere Gehäuseteil 2 ist in seiner Innenkontur kreiszylinderförmig ausgebildet, wobei Nasen 12 radial nach innen in das Lager hineinragen. Die Nasen 12 sind einstückig mit dem äußeren Gehäuse 2 ausgebildet. Es kann jedoch zweckmäßig sein, die Nasen 12 durch eingesteckte Stege oder Stifte zu erzeugen. Die Gleitsegmente 3 und die Federelemente 4 sind Segmente eines Kreisringzylinders mit jeweils unterschiedlichem Druchmesser. Die Welle 1 weist den kleinsten Durchmesser auf, dann kommen die Gleitsegmente 3, das Innere des äußeren Gehäuseteils 2 und zuletzt die Federelemente 4. Durch diese unterschiedliche Wahl der Durchmesser entstehen alle geforderten Kriterien wie die Tragkeile 8 a und 8 b und die Dämpfungsspalte 7 von selbst. Die Dämpfungsspalte 7 sind mondsichelförmig ausgebildet. Das Gleitsegment 3 liegt umfangsmäßig etwa in seiner Mitte auf einer zur Achse der Welle 1 parallelen Linie auf dem Federelement 4 auf. Die Fertigung und der Zusammenbau eines solchen aus Rohrsegmenten aufgebauten aerodynamischen Gleitlagers ist kostenmäßig besonders günstig.

Die nach den Figuren 1 bis 3 ausgebildeten aerodynamischen Gleitlager werden derart montiert, daß zunächst in das mit Stegen bzw. Stiften versehene äußere Gehäuse 2 die Federelemente 4 mit den Gleitsegmenten 3 axial hineingeschoben werden. Durch die Seitenwände der radial nach innen hineinragenden Stege 6 bzw. Stifte 9 werden die Gleitsegmente 3 und die Federelemente 4 daran gehindert, radial in das Innere des aerodynamischen Gleitlagers hineinzufallen. Im Ruhezustand des aerodynamischen Gleitlagers ist die Konstruktion derart bemessen, daß die gelagerte Welle 1 durch die Teilstrukturen 11 unter keine Vorspannung gesetzt ist. Die Welle 1 ist quasi frei beweglich und durch die Teilstrukturen 11 geführt. Das Anlaufverhalten und die Notlaufeigenschaften werden dadurch günstig beeinflußt Die lichte Weite der Dämpfungsspalte wird zweckmäßig zwischen 0,2 und 10%, insbesondere 2 bis 5%, gehalten.

**Patentansprüche**

1. Aeradynamisches Gleitlager für mit hohen Umdrehungsgeschwindigkeiten umlaufende Wellen (1) mit federnden und dämpfenden Strukturen, die in zumindest zwei getrennte, in Umfangsrichtung hintereinander angeordnete Teilstrukturen (11) aufgeteilt sind und wobei die Teilstrukturen (11) aus zwei einzelnen, in radialer Richtung hintereinander angeordneten Bauteilen aufgebaut sind, wobei die der Welle (1) zugewandten Bauteile als im wesentlichen starre Gleitsegmente (3) und die mit dem äußeren Gehäuse (2) verbundenen Bauteile als flexible Federelemente (4) ausgebildet sind, wobei ein Dämpfungsspalt (7) zwischen den Federelementen (4) und dem Gehäuseteil (2) vorgesehen ist und zwischen den mit einer im wesentlichen fest vorgegebenen Kontur bzw. Krümmung versehenen Gleitsegmenten (3) und der Welle (1) ein mehrfach konvergierender Schmierspalt (8a, 8b) vorgesehen ist, dadurch gekennzeichnet, daß die Federelemente (4) jeweils einzeln mit ihren umfangsmäßigen Enden auf dem Gehäuse (2) aufliegen und daß zwischen jedem Federelement (4) und dem Gehäuse (2) ein separater Dämpfungsspalt (7) vorgesehen ist und daß nach Montage der Gleitsegmente (3) und Federsegmente (4) im Gleitlager diese in radialer Richtung nach innen derart festgelegt sind, daß im Ruhezustand des Gleitlagers die Welle (1) im wesentlichen frei bewegbar ist, wobei in umfangsmäßige Richtung sowohl das Federelement (4) als auch das Gleitsegment (3) an dem Gehäuse (2) bzw. an zumindest einem mit dem Gehäuse verbundenen Steg (6) oder Stift (9) abgestützt sind.

2. Gleitlager nach Anspruch 1, dadurch gekennzeichnet, daß die Federelemente (4) auf Stegen (6) oder Stiften (9) aufliegen.

3. Gleitlager nach Anspruch 1 oder 2, dadurch gekennzeichnet, daß im unbelasteten Zustand des Gleitlagers die Dämpfungsspalte (7) als Segmente eines Kreisringzylinders oder als Sichel mit kreisähnlichen Begrenzungsflächen ausgebildet sind.

4. Gleitlager nach einem der Ansprüche 1 bis 3, dadurch gekennzeichnet, daß im unbelasteten Zustand des Gleitlagers die Dämpfungsspalte (7) jeweils eine größte lichte Weite aufweisen und daß der Wert der größten lichten Weite zwischen 0,2 und 10 Promille des Wertes des Druchmessers der gelagertenWelle (1) vorgesehen ist.

5. Gleitlager nach einem der Ansprüche 1 bis 4, dadurch gekennzeichnet, daß das Gleitsegment (3) in radialer Richtung auf einer achsparallelen Fläche in der Mitte des Federelementes (4) aufliegt.

6. Gleitlager nach einem der Ansprüche 1 bis 5, dadurch gekennzeichnet, daß das Gleitsegment (3) aus Kunstkohle hergestellt ist und daß das Federlement (4), beispielsweise als Rohrsegment, aus Stahl gefertigt ist.

## Revendications

1. Palier lisse dynamique à air pour des arbres (1) tournant à des vitesses de révolution élevées, avec des structures élastiques et des structures d'amortissement, qui sont réparties en au moins deux structures partielles (11) disposées successivement en direction périphérique, ces structures partielles (11) étant constituées par deux composants individuels disposés l'un derrière l'autre en direction radiale, les composants en regard de l'arbre (1) étant constitués par des segments lisses (3) essentiellement rigides, tandis que les composants reliés au boîtier externe (2) sont constitués par des éléments élastiques flexibles (4), un interstice d'amortissement (7) étant prévu entre les éléments élastiques (4) et la partie de boîtier (2), tandis qu'entre les segments lisses (3) munis d'un contour ou d'une courbure essentiellement prédéfinie de façon fixe et l'arbre (1), il est prévu un intervalle de lubrification convergent multiple (8a, 8b), palier caractérisé en ce que les éléments élastiques (4) s'appliquent chacun individuellement par leurs extrémités périphériques sur le boîtier (2) et qu'entre chaque élément élastique (4) et le boîtier (2) il est prévu un interstice d'amortissement distinct (7), tandis qu'après le montage des segments lisses (3) et des éléments élastiques (4) dans le palier lisse, ces segments et ces éléments sont fixés en direction radiale vers l'intérieur de façon qu'à l'état de repos du palier lisse, l'arbre (1) est essentiellement librement mobile, cependant qu'en direction' périphérique l'élément élastique (4) tout comme le segment lisse (3) prend appui contre le boîtier (2) ou bien contre au moins une nervure (6) ou une broche (9) reliée à ce boîtier.

2. Palier lisse selon la revendication 1, caractérisé en ce que les éléments élastiques (4) s'appliquent sur des nervures (6) ou des broches (9).

3. Palier lisse selon la revendication 1 ou 2, caractérisé en ce que, lorsque le palier lisse n'est pas chargé, les interstices d'amortissement (7) revêtent la forme de segments d'un cylindre annulaire circulaire ou bien de croissants avec des surfaces de délimitation analogues à des cercles.

4. Palier lisse selon une des revendications 1 à 3, caractérisé en ce que lorsque le palier lisse n'est pas charge, des interstices amortissement (7) ont respectivement une largeur libre maximale, et la valeur de cette largeur libre maximale est prévue entre 0,2 et 10 pour mille de la valeur du diamètre de l'arbre (1) monté dans le palier.

5. Palier lisse selon une des revendications 1 à 4, caractérisé en ce que le segment lisse (3) s'applique en direction radiale sur une surface parallèle à l'axe dans le milieu de l'élément élastique (4).

6. Palier lisse selon une des revendications 1 à 5, caractérisé en ce que le segment lisse (3) est réalisé en carbone synthétique, tandis que l'élément élastique (4) est réalisé en acier, par exemple sous la forme d'un segment de tube.

## Claims

1. An aerodynamic sliding bearing for shafts (1) rotating at high speed and comprising resilient and damping structures divided into at least two separate part-structures (11) disposed one behind the other in the peripheral direction, the part-structures (11) being made up of two individual components disposed one behind the other in the radial direction, the components facing the shaft (1) being substantially rigid sliding segments (3) and the components connected to the outer casing (2) being flexible spring elements (4), an anti-vibration gap (7) being provided between the spring elements (4) and the casing part (2), and a multiple convergent lubricating gap (8a, 8b) being provided between the shaft (1) and the sliding segments (3), which are given a substantially fixed preset contour or curvature, characterised in that the peripheral ends of the spring elements (4) each individually rest on the casing (2) and a separate anti-vibration gap (7) is provided between each spring element (4) and the casing (2) and, after the sliding segments (3) and spring segments (4) have been assembled in the sliding bearing, they are located in the radial direction inwardly so that, when the sliding bearing is in the inoperative state, the shaft (1) is substantially freely movable, both the spring element (4) and the sliding segment (3) being supported in the peripheral direction on the casing (2) or on at least one web (6) or pin (9) connected to the casing.

2. A sliding bearing according to claim 1, characterised in that the spring elements (4) rest on webs (6) or pins (9).

3. A sliding bearing according to claim 1 or 2, characterised in that, when the sliding bearing is in the unloaded state, the damping gaps (7) are segments of a circular cylinder or crescents with near-circular boundary surfaces.

4. A sliding bearing according to any of claims 1 to 3, characterised in that, when the sliding bearing is in the unloaded state, the anti-vibration gaps (7) each have a maximum internal width, and the maximum internal width is between O.2 and 10 thousandths of the diameter of the mounted shaft (1).

5. A sliding bearing according to any of claims 1 to 4, characterised in that the sliding bearing (3) rests in the radial direction on a surface parallel to the axis in the middle of the spring element (4).

6. A sliding bearing according to any of claims 1 to 5, characterised in that the sliding segment (3) is made of artificial carbon and the spring element (4), e.g. a tubular segment, is made of steel.

## FIG.1

EP 0 227 991 B1

FIG.2

2

## FIG.3